Europäisches Patentamt

(19) European Patent Office    (11) Publication number:    **0 046 016**

Office européen des brevets    **B1**

(12)    **EUROPEAN PATENT SPECIFICATION**

(45) Date of publication of patent specification: **10.10.84**    (51) Int. Cl.³: **B 26 D 3/06** // B01D13/00

(21) Application number: **81303231.5**

(22) Date of filing: **14.07.81**

(54) Device for slicing through a plug of potting compound.

<table>
<tr><td>(30) Priority: <b>11.08.80 US 176720</b></td><td>(73) Proprietor: <b>ALBANY INTERNATIONAL CORP.<br>1 Sage Road<br>Menards New York 12201 (US)</b></td></tr>
<tr><td>(43) Date of publication of application:<br><b>17.02.82 Bulletin 82/07</b></td><td></td></tr>
<tr><td></td><td>(72) Inventor: <b>Coplan, Myron J.<br>47 Speen Street<br>Natick Massachusetts 01760 (US)</b><br>Inventor: <b>Bilewski, Friedhelm<br>13 Oak Street<br>Medway Massachusetts 02053 (US)</b></td></tr>
<tr><td>(45) Publication of the grant of the patent:<br><b>10.10.84 Bulletin 84/41</b></td><td></td></tr>
<tr><td>(84) Designated Contracting States:<br><b>AT BE CH DE FR GB IT LI LU NL</b></td><td>(74) Representative: <b>Jennings, Roy Alfred et al<br>GILL JENNINGS & EVERY 53-64 Chancery Lane<br>London WC2A 1HN (GB)</b></td></tr>
<tr><td>(56) References cited:<br><b>DE-C- 50 356<br>DE-C- 82 085<br>FR-A-2 165 568<br>US-A-3 503 288</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The use of membranes to effect separation of gas/gas, liquid/liquid, and liquid/solid mixtures and solutions has achieved general industrial applicability by various methods, among them being ultrafiltration, hyperfiltration, reverse osmosis and dialysis. In general, membranes used in these methods are contained in vessels called modules which comprise a container having various inlet and outlet ports and an assembly of membranes within the container. The internal arrangements of the modules are such as to permit the introduction of a feed stream either under pressure or not on the upstream faces of the membranes and means are provided for collecting permeate which passes through the membranes and emerges on their downstream faces. Means are also, of course, provided for keeping the feed stream and the permeate from commingling.

Membranes have been fabricated in various shapes, such as (1) flat sheets which may be supported in a plate and frame structure similar to a filter press; (2) initially flat sheets which are rolled into spirals with spacing materials interleaved with the membrane and the assembly being sealed to provide spiroidal channels permitting the passage of a feed on one side of the rolled membrane through spaces to the opposite side of the membrane; (3) tubes which line the inner surface of a reinforced braid, the braid itself sometimes being a component in a larger tube; and (4) in the form of open-ended hollow fibres so arranged and sealed into header plates as to provide a separation of the flow over the external surfaces of the hollow fibres from flows within the bores of the hollow-fibres which ensue by virtue of the passage of permeant through the membranes which form the walls of the hollow fibres.

Of particular interest is the use of hollow fibres assembled in a modular form to provide the desired separation.

In our European Patent Application No. 79301885.4 which was published on 2nd April 1980 (Publication No. 0,009,374), various techniques for the selection and winding of hollow fibres and the fabrication and assembly of such fibres into modular form are described. It is noted that a significant consideration in this work is the manner and means of terminating the hollow tubular bundle of fibres so that the ends of the fibres can be opened to allow for the recovery of the permeate from within the hollow fibres and at the same time provide suitable support for the fibres to resist the thrust forces developed by the internal pressures within the module in which the fibres are contained. In the above Application, the use of potting compound solidified around the ends of the fibres is described and slices are taken through the potting compound to expose the fibre bores while providing adequate support to resist internal pressure. The provision of recesses of suitable configuration and position in the potting compound within which the fibre ends are disposed is illustrated.

DE - C - 50 356 discloses a device which is intended for cutting grooves in cardboard and which includes a V-shaped or inverse plough-shaped cutting blade. This device is not however suitable for cutting recesses in the potting compound in hollow fibre modules such as that just described and it has been found that the necessary configuration and positions of the recesses can be achieved only with great difficulty and consumption of time and that repetition could not be achieved with accuracy by the use of known methods and equipment.

The present invention provides a device for slicing through a plug of potting compound forming a module termination plug which enables the plug to be sliced through accurately and quickly and with a high degree of predictable repetition to expose the bores of the fibres embedded in the plug while maintaining structural integrity of the plug.

According to this invention, such a device includes a cutting blade of inverse plough-shape and is characterised by including, in combination with the cutting blade, a housing for holding the plug and means for moving the blade between a retracted position and a cutting position in a cutting stroke, and the cutting blade comprising two sides which form a V resulting at the cutting zone of the blade in the blade having two separate sub-blades each of which has a uniform side reflex angle and two distinct sections of different side rake angles.

Preferably each of the sub-blades has a cutting edge depressed from the horizontal at an angle of thirty degrees with one rake angle being of five degrees and the other rake angle being of fifteen degrees.

Preferably also, the housing includes a receptacle in which the plug is contained and a notch is formed in the receptacle exposing the plug to the cutting blade as the blade moves to its cutting position.

An example of a device in accordance with the invention is illustrated in the accompanying drawings in which:—

Figure 1 is a side elevation of the device;

Figure 2 is a partial underneath plan view of the device showing a cutting blade and a base platform, the blade being retracted from a plug receptacle;

Figure 3 is a view similar to Figure 2 but with the blade fully advanced below the plug receptacle;

Figure 4 is a sectional view taken in the direction of the arrows on the line 4—4 in Figure 2 illustrating the cutting blade approaching a module termination plug positioned in the receptacle;

Figure 5 is a sectional view similar to Figure 4 but taken in the direction of the arrows on the line 5—5 in Figure 3 illustrating a slice being taken from the module termination plug; and

Figures 6, 7, 8 and 9 are views of the cutting blade of the device taken from different directions to show the configuration of the blade, Figure 6 being a perspective view looking down on the blade as viewed in Figure 1, Figures 7 and 8 being bottom and end views respectively and Figure 9 being a partial sectional view taken in the direction of the arrows on the line 9——9 in Figure 6.

The slicing device shown in the drawings includes a fixed assembly 10 for supporting a module 12 in position and a movable assembly 14 for reciprocating a cutting blade 16 into and out of a slicing position to slice the module 12.

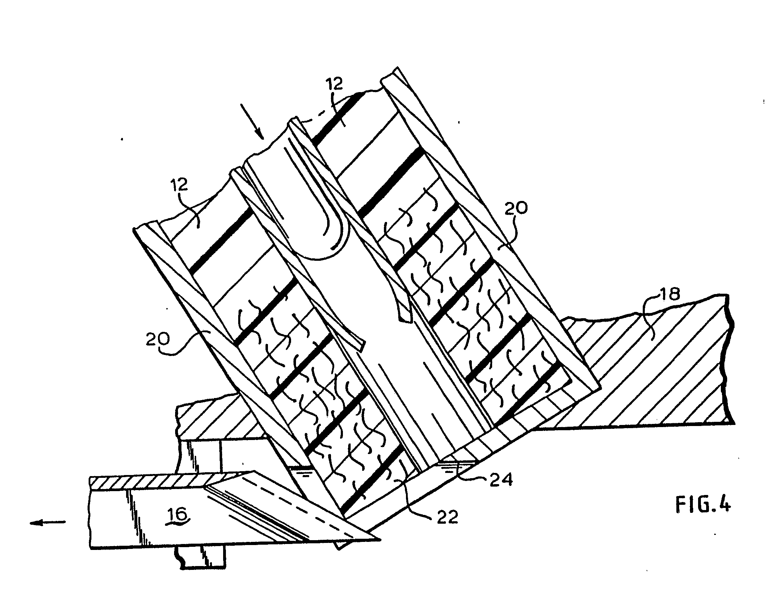

The fixed assembly 10 includes a housing 18 which supports a cylindrical receptacle 20 within which the module 12 is contained with a portion of a plug 22 of the module (see Figure 4) exposed to the cutting blade 16 through a notch 24 in the receptacle. During reciprocal movement of the blade, the blade is guided to the notch by guide means 26 which is also mounted on the housing 18.

The cutting blade 16 is mounted on a piston rod 28 of a slow speed pneumatic cylinder 30 and is of a compound V or inverse plough (mirror image of a plough) configuration so that it digs into the potting compound or plug 22 while undergoing a minimum resistance from the material being sliced. The cutting blade 16 is formed of D2 tool steel which is hardened to Rockwell C 60, ground and stress relieved so that it is hard enough to give in the face of the wedging action which it encounters as it enters the potting compound.

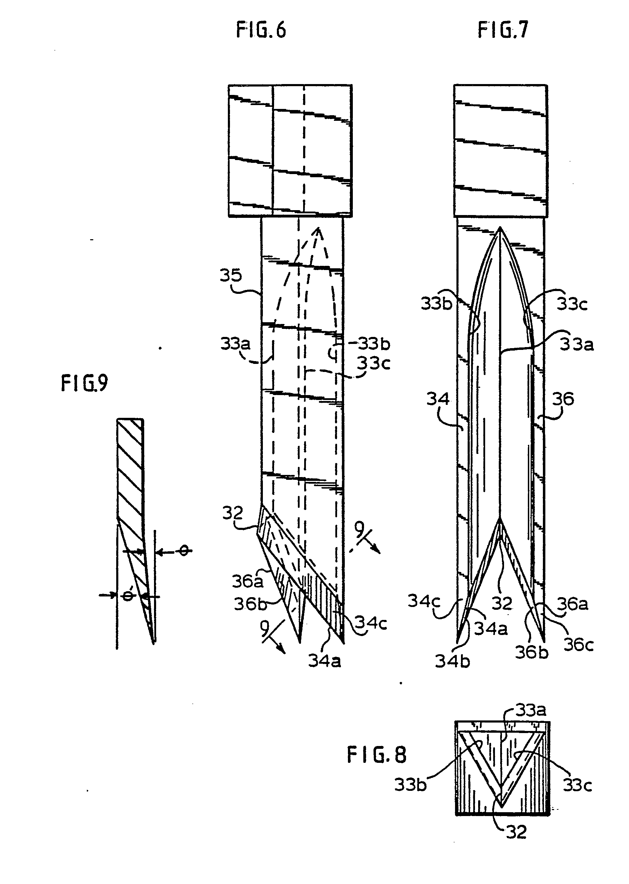

The blade 16 can be formed out of stock of triangular section with one surface hollowed out to provide two sides which form a V. As shown in Figures 6 to 8 of the drawings a channel of the cut out portion is defined essentially by lines 33a, 33b and 33c. The V-shape and the portion cut out result at the cutting zone in two separate sub-blades, 34 and 36, each with its own cutting edge 34a and 36a respectively. The line 33a meets the line 32 of the cutting zone. Each of the sub-blades has a uniform side reflex angle 34b and 36b respectively, but each blade has two distinct sections of different side rake or clearance angles. The sub-blades are mirror images of each other.

Thus in the illustrated example where the cutting edges 34a and 36a are depressed from the horizontal as defined by an apex at an angle of thirty degrees from above, the rake angle $\theta$ of sector 34c is five degrees while the rake angle $\theta'$ of sector 34d is fifteen degrees. The situation is similar but reversed for the sub-blade 36 as is obvious from the drawings.

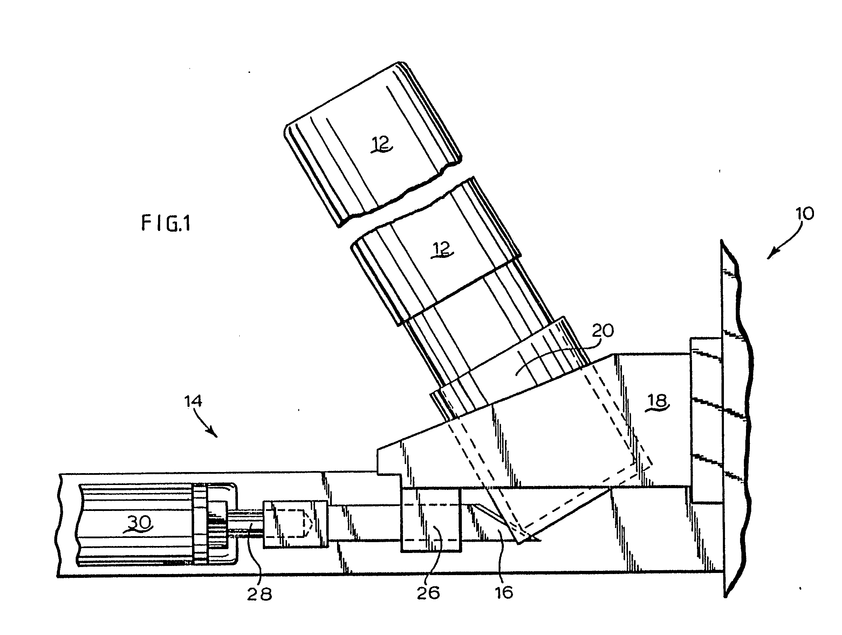

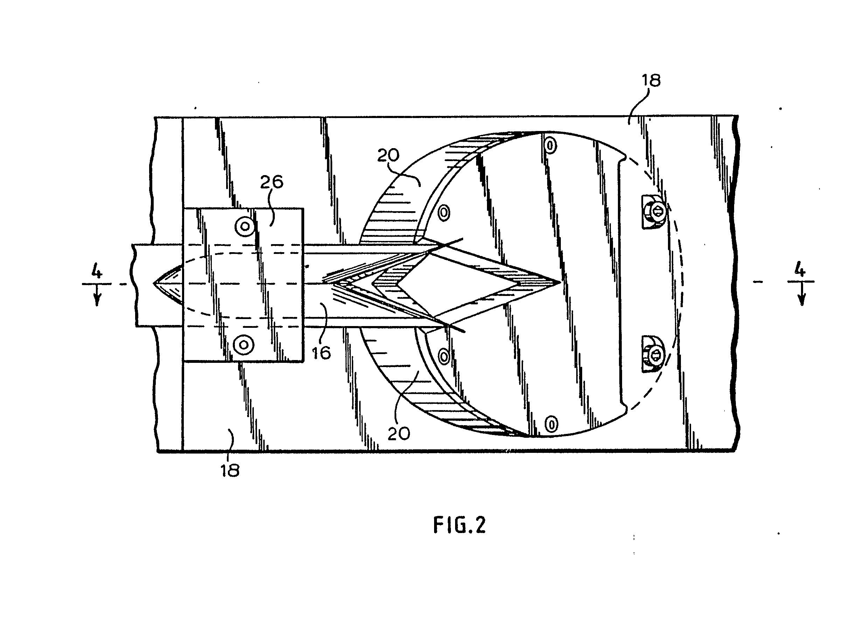

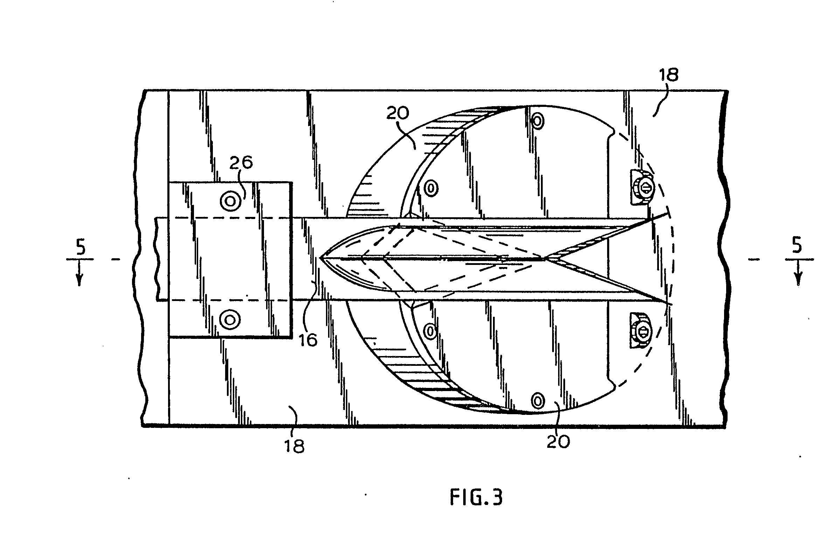

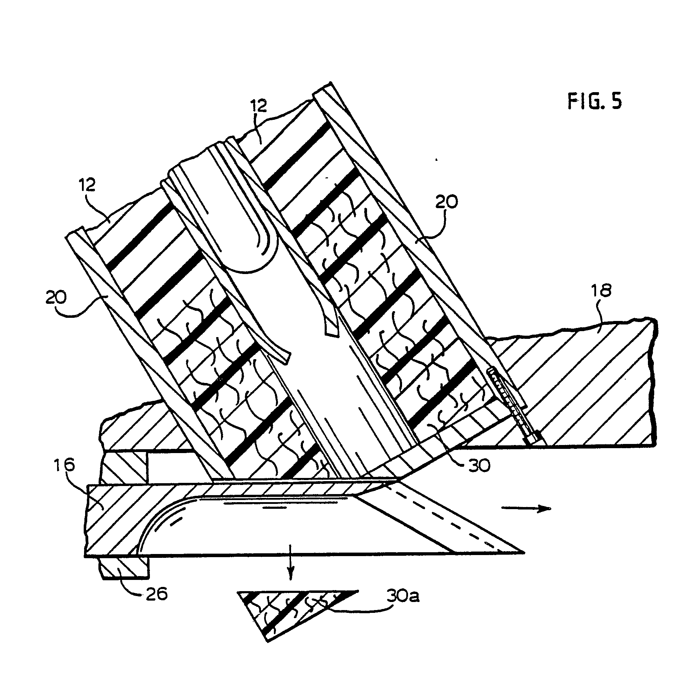

In use, the module 12 is placed in position within the receptacle 20 when the blade 16 is in the position shown in Figures 1, 2 and 4. A portion of the plug 22 protrudes at the notch 24. The cylinder 30 is actuated to move the piston rod 28 with the blade 16 attached to the right as seen in Figures 3 and 5 so that the blade, guided by the guide 26, slices the potting compound as desired to separate a portion 30a therefrom as seen in Figure 5.

## Claims

1. A slicing device for slicing through a plug of potting compound forming a termination plug of a hollow fibre module, the device including a cutting blade of inverse plough-shape and being characterised by including, in combination with the cutting blade (16), a housing (18) for holding the plug (22), and means (28, 30) for moving the blade (16) between a retracted position (Figure 4) and a cutting position (Figure 5) in a cutting stroke, and the cutting blade (16) comprising two sides which form a V resulting at the cutting zone of the blade in the blade having two separate sub-blades (34, 36) each of which has a uniform side reflex angle (34b, 36b) and two distinct sections (34c, 34d) of different side rake angles ($\theta$, $\theta'$).

2. A device according to Claim 1, in which each of the sub-blades (34, 36) has a cutting edge (34a, 36a) depressed from the horizontal at an angle of thirty degrees with one rake angle ($\theta$) being of five degrees and the other rake angle ($\theta'$) being of fifteen degrees.

3. A device according to Claim 1 or Claim 2, in which the housing (18) includes a receptacle (20) in which the plug (22) is contained and a notch (24) is formed in the receptacle (20) exposing the plug (22) to the cutting blade (16) as the blade moves to its cutting position.

## Revendications

1. Dispositif de tranchage destiné à trancher un bouchon de composé d'enrobage formant un bouchon de terminaison d'un module à fibres creuses, le dispositif comprenant une lame de coupe en forme de soc inversé et étant caractérisé en ce qu'il comprend, en combinaison avec la lame de coupe (16), un bâti (18) destiné à maintenir le bouchon (22), et des moyens (28, 30) destinés à déplacer la lame (16) entre une position de retrait (figure 4) et une position de coupe (figure 5) sur une course de coupe, la lame de coupe (16) comprenant deux côtés qui forment un V dont le résultat est, à la zone de coupe de la lame, que la lame possède deux sous-lames séparées (34, 36) ayant chacune un angle rentrant latéral uniforme (34b, 36b) et deux sections distinctes (34c, 34d), d'angles latéraux de coupe différents ($\theta$, $\theta'$).

2. Dispositif selon la revendication 1, dans lequel chacune des sous-lames (34, 36) possède une arête de coupe (34a, 36a), abaissée par rapport à l'horizontale d'un angle de 30°, un premier angle de coupe ($\theta'$) étant de 5° et l'autre angle de coupe ($\theta'$) étant de 15°.

3. Dispositif selon la revendication 1 ou la revendication 2, dans lequel le bâti (18) comporte un logement (20) dans lequel le bouchon (22) est contenu, et une encoche (24) est formée dans le logement (20), exposant le bouchon (22) à la lame de coupe (16) lorsque la lame se déplace vers sa position de coupe.

**Patentansprüche**

1. Schneidmaschine zum Durchschneiden eines Stopfens einer Potting-Verbindung unter Ausbildung eines Endstopfens eines Hohlfasermoduls, wobei die Maschine ein Schneidblatt bzw. -Klinge mit umgekehrter Pflug-Form aufweist und dadurch gekennzeichnet ist, daß sie in Kombination mit der Schneidklinge (16) ein Gehäuse (18) zum Halten des Stopfens (22) aufweist, sowie Mittel (28, 30) zum Bewegen der Klinge (16) zwischen einer zurückgezogenen Stellung (Fig. 4) und einer Schneidstellung (Fig. 5) in einem Arbeitsgang, und daß die Schneidklinge (16) zwei Seiten umfaßt, die ein V bilden, das am Schnittestellenbereich der Klinge in der Klinge entsteht, die zwei getrennte Unterklingen (34, 36) aufweist, von denen jede einen einheitlichen Seitenreflexwinkel (34b, 36b) und zwei bestimmte Abschnitte (34c, 34d) mit unterschiedlichem Seiten-Spanwinkel ($\theta$, $\theta'$) besitzt.

2. Schneidmaschine nach Anspruch 1, dadurch gekennzeichnet, daß jede Unterklinge (34, 36) eine Schneidkante (34a, 36a) besitzt, die in einem Winkel von 30° abgefalcht ist, wobei der eine Spanwinkel ($\theta$) 5° und der andere ($\theta'$) 15° beträgt.

3. Schneidmaschine nach Anspruch 1 oder 2, dadurch gekennzeichnet, daß das Gehäuse (18) ein Behältnis (20) umfaßt, in dem der Stopfen (22) aufgenommen wird, und daß eine Kerbe (24) im Behältnis (20) geformt ist, die den Stopfen zue Schneidklinge (16) freilegt, während sich die Klinge in ihre Schneidstellung bewegt.

FIG.1

0 046 016

FIG.2

FIG.3

FIG.4

0 046 016

FIG. 5

FIG.6  FIG.7

FIG.9

FIG.8

6